# FASCICULE DE BREVET EUROPEEN

(11) **EP 3 241 700 B1**
(45) Date de publication et mention de la délivrance du brevet: **24.04.2019**
(21) Numéro de dépôt: 15828663.3
(22) Date de dépôt: 09.12.2015
(51) Int. Cl.: B60J 5/10, B62D 35/00

(54) **PANNEAU DE HAYON ARRIÈRE DE VÉHICULE AUTOMOBILE ET VÉHICULE AUTOMOBILE COMPRENANT LE PANNEAU**
HECKKLAPPENPLATTE FÜR KRAFTFAHRZEUG UND KRAFTFAHRZEUG MIT DER PLATTE
MOTOR VEHICLE REAR HATCH PANEL AND MOTOR VEHICLE HAVING THE PANEL

(30) Priorité: 30.12.2014 CN 201420859708 U
(43) Date de publication de la demande: 08.11.2017
(73) Titulaire: Compagnie Plastic Omnium, 69007 Lyon (FR)
(72) Inventeur: DEPARDON, Pascal, Meximieux F-01800 (FR); HACHE, Bertrand, Saint Cyr F-07430 (FR)
(74) Mandataire: Andrieux, Benoît
(86) Numéro de dépôt international: PCT/IB2015/059475
(87) Numéro de publication internationale: WO 2016/108109

(56) Documents cités:
- FR-A1- 2 990 654
- JP-A- 2001 328 429
- JP-A- 2011 031 686
- JP-A- 2012 144 176

## Description

### Domaine technique

La présente invention relève du domaine de la fabrication des éléments de carrosserie de véhicule automobile ; plus concrètement, elle concerne un type de panneau de hayon de véhicule automobile et les véhicules automobiles comprenant ce panneau.

### Technique antérieure

Dans le domaine de la fabrication des éléments de carrosserie de véhicule automobile, de plus en plus d'éléments sont fabriqués à partir de matériau composite, afin de réduire la masse totale et la consommation de carburant. De plus, étant donné que les éléments fabriqués avec des matériaux composites ont des formes complexes et variables, et d'excellentes performances mécaniques, ils sont utilisés dans de nombreux éléments de véhicule automobile, par exemple les éléments structurels de poutres de chocs ou de portes. On appelle éléments structurels les éléments apportant à la carrosserie ou à la caisse d'un véhicule la rigidité et la résistance nécessaires ; ils servent aussi à supporter ou à porter d'autres éléments, par exemple le panneau de hayon de véhicule automobile.

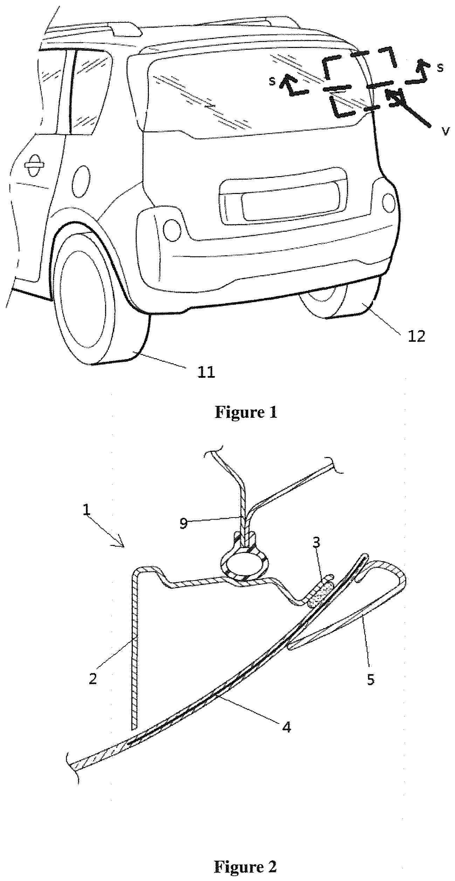

Le panneau de hayon de véhicule automobile comprend en général un caisson ; le caisson comprend habituellement une zone de collage, sur laquelle une vitre est collée. Dans la technique actuelle, comme l'indique la figure 2, le caisson 2 est en général limité par une zone de collage 3, il ne dépasse pas la zone de collage pour s'étendre sur une portion extérieure au hayon. Par ailleurs, afin d'améliorer les performances aérodynamiques du véhicule automobile, et pour satisfaire aux exigences des normes d'émission, un déflecteur 5 est fixé ou collé sur la portion qui se prolonge du caisson 2 du hayon ou sur la vitre 4. Étant donné que le déflecteur attaché ou collé est un élément supplémentaire fabriqué à part, cela provoque une augmentation du coût et une étape supplémentaire de fabrication ; il faut en outre attacher ou coller le déflecteur fabriqué sur la vitre ou sur le caisson, ce qui implique une opération technique supplémentaire ; il faut en plus appliquer un traitement préalable à la vitre ou au caisson, par exemple percer des trous permettant le vissage ou le rivetage, ou bien procéder à un polissage pour renforcer l'efficacité du collage, etc. Tout cela provoque l'augmentation des coûts de fabrication du panneau de hayon de véhicule automobile, allonge la durée et ajoute des étapes techniques. Afin de simplifier le processus de fabrication décrit ci-dessus, une solution de remplacement possible, lorsque la vitre du hayon est en verre organique, consiste à intégrer la vitre et le déflecteur, la vitre et le déflecteur formant ainsi un élément unique, ce qui permet d'éviter les opérations supplémentaires. L'un des défauts de cette solution est que, étant donné que la formation et le traitement de surface de cette vitre présentent des difficultés importantes, le niveau de complexité du déflecteur intégré à la vitre sera sensiblement limité, et ces limites feront que le déflecteur intégré à la vitre aura difficilement une forme permettant d'assurer des performances aérodynamiques élevées, ce qui annulera ou limitera le rôle du déflecteur dans cette zone.

Le document JP 2011-031686 décrit un hayon selon l'art antérieure.

Il est dès lors nécessaire de proposer une solution de remplacement qui permette d'obtenir un panneau de hayon de véhicule automobile remplissant les fonctions d'un déflecteur efficace et qui pourra être fabriqué et intégré de façon économique, et qui permette en outre de garantir que la portion qui remplit la fonction de déflecteur présente de bonnes performances aérodynamiques.

### Exposé de l'invention

Le but de la présente invention est de remédier aux défauts des solutions ci-dessus de façon à fabriquer un panneau de hayon de véhicule automobile comportant des déflecteurs, en proposant une solution de remplacement efficace et économiquement faisable. Pour cela, la présente invention propose un panneau de hayon de véhicule automobile ayant une face tournée vers l'intérieur du véhicule et une face tournée vers l'extérieur du véhicule, et possédant un caisson qui comprend une zone de collage sur la face extérieure pour recevoir une vitre par collage, caractérisé en ce que le caisson se prolonge au-delà de la zone de collage, pour former au moins une partie en saillie visible de l'extérieur du véhicule, dont la forme en saillie permet d'avoir des performances aérodynamiques élevées. Étant donné que cette portion présente de hautes performances aérodynamiques, elle parvient à jouer le même rôle qu'un déflecteur attaché ou collé. Par ailleurs, du fait que cette portion est intégrée au caisson du hayon de véhicule automobile, il n'est pas nécessaire de fabriquer à part un déflecteur supplémentaire et on fait en outre l'économie de l'opération technique d'installation, ce qui permet d'améliorer sensiblement la productivité et de réaliser une économie sur le coût de production. Par ailleurs, étant donné que les caissons du hayon de véhicule automobile, sont en général fabriqués avec des matériaux composites, on peut obtenir toutes sortes de formes profilées complexes, et donc satisfaire à l'exigence de hautes performances aérodynamiques, et dès lors optimiser les performances aérodynamiques du véhicule automobile. Enfin, étant donné que l'ensemble du panneau est intégré, on fait l'économie des inserts ou éléments de connexion métalliques se trouvant entre les anciens éléments, et on réduit donc ainsi sensiblement la masse et la résistance à l'air du véhicule automobile sur cette portion.

Un mode de réalisation selon la présente invention consiste en un panneau de hayon comprenant deux parties visibles de l'extérieur pour former des déflecteurs sur les côtés latéraux de la vitre. Cela revient à intégrer en un seul élément les déflecteurs indépendants qui étaient auparavant attachés ou collés des deux côtés du panneau de hayon, et le panneau de hayon lui-même.

Un mode de réalisation selon la présente invention consiste en ce que lesdites parties en saillie visibles de l'extérieur du véhicule automobile comprennent des nervures de renforcement.

Les nervures de renforcement ont de préférence une section en L ou en V.

Un mode de réalisation selon la présente invention consiste en ce que ledit caisson comporte un matériau composite dont le substrat est en plastique thermodurcissable.

Le terme technique « matériau composite » désigne un matériau fréquemment employé dans la fabrication des composants de véhicules automobiles, habituellement constitué d'un substrat en plastique et d'un élément de renforcement (par exemple fibres ou textile) imprégné dans ce substrat. La présence de l'élément de renforcement permet au matériau composite d'avoir une résistance mécanique plus élevée ; ce matériau est habituellement employé pour fabriquer des éléments dont une zone ou l'ensemble des zones doivent être renforcées, par exemple les éléments des différents panneaux. Selon la nature du substrat en plastique, on distingue les matériaux composites avec substrat en plastique thermodurcissable et les matériaux composites avec substrat en plastique thermoplastique. Le terme technique « plastique thermodurcissable» désigne un plastique capable de se durcir lorsqu'il est soumis à la chaleur ou sous d'autres conditions et qui présente la caractéristique d'être insoluble (et de ne pas fondre), comme les plastiques phénoliques, les plastiques époxydiques, etc. La première fois qu'il est soumis à la chaleur, un plastique thermodurcissable peut fondre et s'écouler; lorsqu'il est chauffé a une certaine température, une réaction chimique se produit, qui est une réaction de réticulation, et le plastique est solidifié et se durcit ; cette transformation est irréversible et par la suite, lorsque le plastique est de nouveau chauffé, il ne fond pas, ni ne s'écoule. C'est justement cette caractéristique qui est mise à profit pour le formage ; on profite du fait que le matériau fond et devient fluide lors de la première exposition à la chaleur, pour former des cavités sous l'action de la pression, de façon à obtenir des produits durcis qui ont une forme et des dimensions déterminées.

Un mode de réalisation selon la présente invention consiste en ce que ladite partie visible de l'extérieur du véhicule reçoit un traitement de surface pour résister aux ultra-violets (UV), ou pourra être peinte ou surmoulée avec un film décoratif. De la sorte, la surface extérieure de ce composant peut constituer une partie intégrante de l'esthétique générale du véhicule automobile, et possède des caractéristiques extérieures qui sont conformes au design d'ensemble du véhicule automobile.

Un mode de réalisation selon la présente invention consiste en ce que ledit véhicule automobile comprend un panneau de hayon selon l'un quelconque des modes de réalisation ci-dessus.

### Description des dessins en annexe

Des descriptions détaillées de la présente invention sont données ci-dessous en s'appuyant sur les dessins en annexe. Les techniciens du présent domaine technique comprendront facilement que ces dessins ne sont donnés que dans un but explicatif, et qu'ils n'ont en aucun cas pour but de limiter le domaine de protection de la présente invention. Dans les différents dessins en annexe, des indications identiques correspondent à des éléments identiques ou similaires. Pour les besoins de l'explication, ces dessins ne sont pas entièrement dessinés à l'échelle.
La figure 1 est la vue arrière d'un véhicule automobile utilisant un mode de réalisation de la présente invention ;
La figure 2 est une vue éclatée à l'horizontale dans la direction S de la figure 1 qui illustre la technique actuelle ;
La figure 3 est une vue éclatée à l'horizontale dans la direction S de la figure 1 d'un panneau de hayon selon un mode de réalisation de la présente invention ;
La figure 4 est une perspective agrandie du côté intérieur droit d'un panneau de hayon selon un mode de réalisation de la présente invention ;
La figure 5 est une vue agrandie partielle de la zone de collage dans la direction V de la figure 1 ;
La figure 6 est une vue en trois dimensions du côté intérieur droit d'un panneau de hayon selon un mode de réalisation de la présente invention ;
La figure 7 est une vue en trois dimensions du côté intérieur gauche d'un panneau de hayon selon un autre mode de réalisation de la présente invention ;
La figure 8 est une vue en perspective d'un panneau de hayon selon un autre mode de réalisation de la présente invention.

### Modes de réalisation

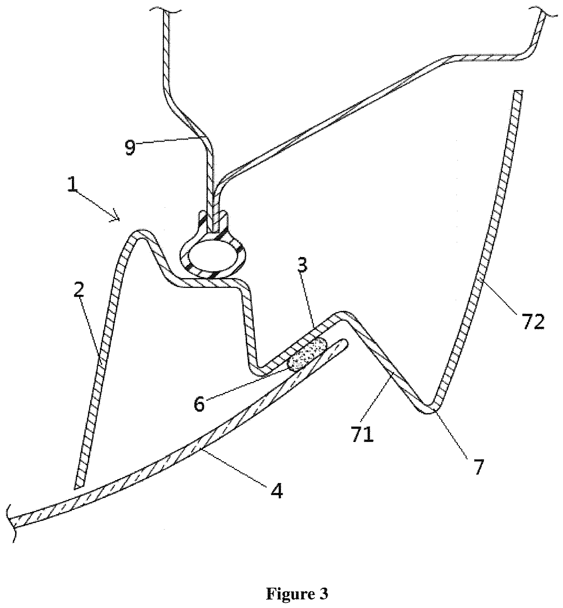

La figure 1 représente la partie postérieure d'un véhicule automobile qui comprend un hayon, et qui peut être un véhicule bicorps, une voiture familiale ou un véhicule tous terrains. Comme l'indique la figure 1, le côté où se trouve la roue arrière 11 est le côté gauche du véhicule automobile, le côté où se trouve la roue arrière 12 est le côté droit du véhicule automobile. Lorsque l'on divise le panneau de hayon 1, horizontalement dans la direction S, parallèlement à la longueur du véhicule automobile sur la figure 1, on obtient les vues éclatées des figures 2 et 3. Sur la figure 2, on voit un panneau de hayon 1 comportant un déflecteur 5 fabriqué séparément et collé sur la vitre 4 dans la technique actuelle. À partir de la figure 2, on peut voir qu'un côté du caisson 2 est relié à la structure métallique 9, l'autre côté étant relié (collé) à la vitre 4. Le bord extérieur du caisson 2 s'arrête à la zone de collage 3 de la vitre 4, il ne va pas au-delà de cette zone.

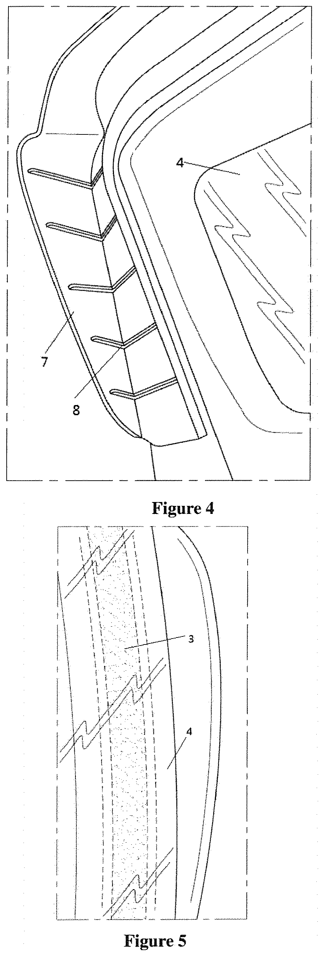

La figure 3 montre la portion située à droite du véhicule automobile d'un panneau de hayon 1 selon un mode de réalisation conforme à la présente invention. Comme l'indique la figure 3, un côté (avant du véhicule automobile) du caisson 2 est relié à la structure métallique 9, l'autre côté (arrière du véhicule automobile) est collé à la vitre 4 dans la zone de collage 3 a l'aide d'un adhésif 6. La figure 5 donne un agrandissement partiel de la zone de collage 3. Le bord extérieur du caisson 2 (côté droit du véhicule automobile) va au-delà de la zone de collage 3 et se prolonge jusqu'à s'étendre au-delà du panneau de hayon 1, formant une partie en saillie 7 visible de l'extérieur du véhicule ; cette partie en saillie 7 possède une forme qui a de bonnes performances aérodynamiques, et comporte une face dorsale 71 et une face latérale 72.

Étant donné que la partie en saillie 7 possède de bonnes performances aérodynamiques, elle peut jouer un rôle similaire à celui des déflecteurs 5 de la figure 2. Par ailleurs, étant donné que la partie en saillie 7 est une extension du caisson 2, et qu'elle est intégrée au caisson 2, il n'est pas nécessaire de fabriquer séparément des déflecteurs 5, et on fait en plus l'économie des opérations techniques d'installation correspondantes, ce qui permet d'améliorer sensiblement la productivité et de réaliser des économies sur le coût de production.

Pour un mode de réalisation basé sur la présente invention, on peut utiliser un matériau composite, en sélectionnant de préférence un plastique thermodurcissable, pour fabriquer le caisson 2 et la partie en saille 7. Étant donné que le matériau composite thermodurcissable présente à la fois de bonnes performances de plasticité et une assez bonne résistance mécanique, il permet de réaliser des composants intégrés aérodynamiques de forme complexe capables de satisfaire les exigences de résistance mécanique, par exemple la partie en saillie 7 de la figure 3. Par ailleurs, étant donné que l'ensemble du panneau est intégré, on fait l'économie des inserts métalliques ou des pièces de liaison entre les différentes pièces, et on réduit ainsi au maximum la masse propre et la résistance a l'air du véhicule automobile sur cette zone.

Pour un mode de réalisation basé sur la présente invention, les surfaces extérieures de la face dorsale 71 et de la face latérale 72 de la partie en saillie 7 constituent des parties intégrantes de l'aspect extérieur général du véhicule automobile, et présentent des caractéristiques de surface qui sont conformes au design d'ensemble de l'extérieur du véhicule automobile ; il est pour cela nécessaire d'appliquer un traitement de surface, pour permettre une résistance aux ultraviolets, ou d'appliquer de la peinture, ou encore d'envelopper avec un film décoratif.

On peut comprendre que le mode de réalisation ci-dessus ne représente de façon schématique que le côté droit du panneau de hayon 1, et que le côté gauche n'est pas représenté. Les techniciens du présent domaine technique comprendront sans difficulté que la structure et la forme du côté gauche et du côté droit sont identiques et symétriques.

La figure 4 représente le schéma agrandi partiel de la zone à proximité de la partie en saillie 7 du panneau de hayon 1 selon un autre mode de réalisation de la présente invention. Cette figure montre la structure interne du panneau de hayon 1 sur le côté droit du véhicule automobile. Comme le montre la figure 4, la partie en saillie 7 comporte encore des nervures de renforcement 8. Dès lors, le panneau de hayon 1 présente dans cette zone une résistance mécanique plus importante. De préférence, les nervures de renforcement 8 ont une section en L ou en V.

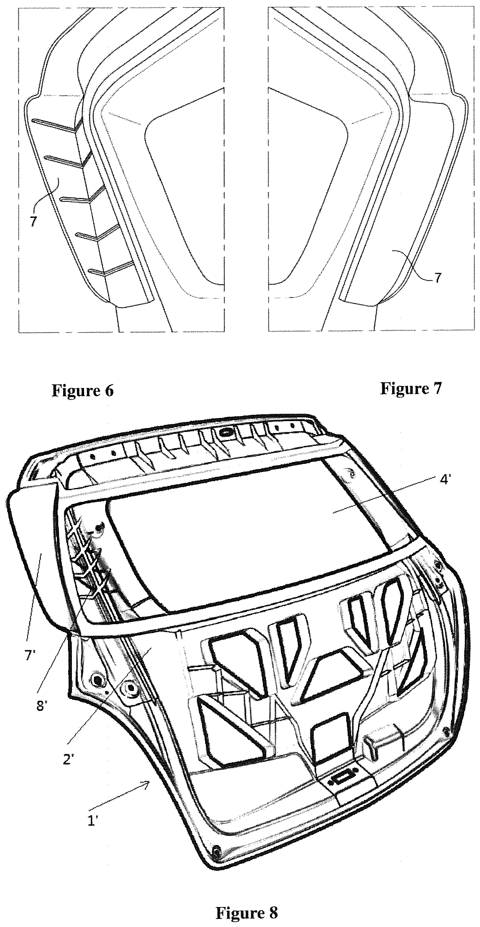

Les figures 6 et 7 représentent respectivement les schémas agrandis de la partie en saillie 7 selon deux modes de réalisation différents de la présente invention. La partie en saillie 7 de la figure 6 se trouve sur le côté droit du véhicule automobile et possède des nervures de renforcement, tandis que la partie en saillie 7 de la figure 7 se trouve sur le côté gauche du véhicule automobile et elle est dépourvue de nervures de renforcement.

La figure 8 représente un panneau de hayon 1' selon un autre mode de réalisation de la présente invention ; ce panneau de hayon 1' présente une forme et une structure différentes de celles du panneau de hayon 1, mais peut aussi, sur la base du mode de réalisation ci-dessus, comprendre une partie en saillie 7' intégrée par le biais de l'extension du caisson intérieur 2'. Cette partie en saillie 7' présente des nervures de renforcement 8' dont la forme et la structure sont différentes de celles du mode de réalisation précédent.

Les figures en annexe et les explications qui précèdent ont décrit des modes de réalisation non limitants de la présente invention. Afin d'expliciter les principes de l'invention, certains éléments conventionnels ont été simplifiés ou omis. Les techniciens du présent domaine technique doivent pouvoir comprendre que les variantes de ces modes de réalisation relèvent du domaine de la présente invention. Les techniciens du présent domaine technique doivent aussi pouvoir comprendre que les caractéristiques décrites ci-avant peuvent être associées de toutes sortes de manières pour constituer de nombreuses variantes de la présente invention. Dès lors, la présente invention ne se limite en rien aux modes de réalisation décrits précédemment, et n'est limité que par les revendications.

## Revendications

1. Panneau (1) de hayon de véhicule automobile, le panneau (1) ayant une face tournée vers l'intérieur du véhicule et une face tournée vers l'extérieur du véhicule, le panneau (1) comprenant un caisson (2), le caisson (2) comprenant une zone de collage (3) sur la face extérieure pour recevoir une vitre (4) par collage, **caractérisé en ce que** le caisson (2) se prolonge au-delà de la zone de collage (3), pour former au moins une partie (7) en saillie visible de l'extérieur du véhicule, et dont la forme en saillie présente des performances aérodynamiques élevées.

2. Panneau (1) de hayon selon la revendication 1, dans lequel le panneau comprend deux parties (7) visibles de l'extérieur du véhicule pour former des déflecteurs (5) sur les côtés latéraux de la vitre (4).

3. Panneau (1) de hayon selon la revendication 1, dans lequel la partie (7) en saillie visible de l'extérieur du véhicule comprend des nervures de renforcement (8).

4. Panneau (1) de hayon selon la revendication 3, dans lequel les nervures de renforcement (8) ont une section en L ou en V.

5. Panneau (1) de hayon selon la revendication 1, dans lequel le caisson (2) comprend un matériau composite à matrice thermodurcissable.

6. Panneau (1) de hayon selon la revendication 1, dans lequel la partie (7) visible de l'extérieur du véhicule reçoit un traitement de surface pour résister aux ultra-violets (UV), ou pourra être peinte ou surmoulée avec un film décoratif.

7. Véhicule automobile, **caractérisé en ce qu'**il comprend un panneau (1) de hayon selon l'une des revendications précédentes.

## Patentansprüche

1. Heckklappenplatte (1) für Kraftfahrzeug, wobei die Platte (1) eine Seite aufweist, die nach innerhalb des Fahrzeugs weist, und eine Seite aufweist, die nach außerhalb des Fahrzeugs weist, wobei die Platte (1) ein Kastenprofil (2) umfasst, wobei das Kastenprofil (2) eine Klebezone (3) auf der Außenseite zum Aufnehmen einer Scheibe (4) durch Verkleben umfasst, **dadurch gekennzeichnet, dass** das Kastenprofil (2) sich über die Klebezone (3) fortsetzt, um mindestens ein vorspringendes Teil (7) zu bilden, das von außerhalb des Fahrzeugs sichtbar ist und dessen vorspringende Form erhöhte aerodynamische Leistungsmerkmale aufweist.

2. Heckklappenplatte (1) nach Anspruch 1, wobei die Platte zwei von von außerhalb des Fahrzeugs sichtbare Teile (7) umfasst, um Ablenkmittel (5) auf den seitlichen Flächen der Scheibe (4) zu bilden.

3. Heckklappenplatte (1) nach Anspruch 1, wobei das von außerhalb des Fahrzeugs sichtbare vorspringende Teil (7) Verstärkungsrippen (8) umfasst.

4. Heckklappenplatte (1) nach Anspruch 3, wobei die Verstärkungsrippen (8) einen L- oder V-förmigen Querschnitt aufweisen.

5. Heckklappenplatte (1) nach Anspruch 1, wobei das Kastenprofil (2) ein Verbundmaterial mit duroplastischer Matrix enthält.

6. Heckklappenplatte (1) nach Anspruch 1, wobei das von außerhalb des Fahrzeugs sichtbare Teil (7) eine Oberflächenbehandlung erhält, um Ultraviolettstrahlung-(UV-) Strahlung standzuhalten, oder lackiert oder mit einer Dekorfolie konfektioniert sein könnte.

7. Kraftfahrzeug, **dadurch gekennzeichnet, dass** es eine Heckklappenplatte (1) nach einem der vorhergehenden Ansprüche umfasst.

## Claims

1. Motor vehicle tail gate panel (1), the panel (1) having one side facing the inside of the vehicle and one side facing the outside of the vehicle, the panel (1) having a box (2), the box (2) comprising an adhesion area (3) on the outer side for adhering a glass (4), **characterised in that** the box (2) extends beyond the adhesion area (3), so as to form at least one protruding section (7) that is visible from the outside of the vehicle, and whose protruding shape provides high aerodynamic performance.

2. Tail gate panel (1) according to claim 1, wherein the panel comprises two sections (7) visible from the outside of the vehicle to form spoilers (5) on the lateral sides of the glass (4).

3. Tail gate panel (1) according to claim 1, wherein the protruding section (7) visible from the outside of the vehicle comprises reinforcement ribs (8).

4. Tail gate panel (1) according to claim 3, wherein the reinforcement ribs (8) have an L- or V-shaped cross-section.

5. Tail gate panel (1) according to claim 1, wherein the box (2) comprises a composite material with thermosetting matrix.

6. Tail gate panel (1) according to claim 1, wherein the section (7) visible from the outside of the vehicle is given surface treatment to withstand ultraviolet (UV) radiation, or can be painted or overmoulded with a decorative film.

7. Motor vehicle, **characterised in that** it comprises a tail gate panel (1) according to one of the preceding claims.
